# EUROPEAN PATENT SPECIFICATION

(11) **EP 2 098 775 B1**
(45) Date of publication and mention of the grant of the patent: **20.06.2012**
(21) Application number: 09154464.3
(22) Date of filing: 05.03.2009
(51) Int. Cl.: F21S 8/12, F21V 14/08, F21W 101/10

(54) **Vehicle headlamp**
Scheinwerfer für Fahrzeuge
Projecteur de véhicule automobile

(30) Priority: 05.03.2008 JP 2008054269
(43) Date of publication of application: 09.09.2009
(73) Proprietor: Koito Manufacturing Co., Ltd., Tokyo 108-8711 (JP)
(72) Inventor: Mochizuki, Kiyotaka, Shizuoka-shi, Shizuoka (JP); Hori, Takashi, Shizuoka-shi, Shizuoka (JP)
(74) Representative: Intès, Didier Gérard André

(56) References cited:
- EP-A2- 1 422 472
- EP-A2- 1 640 658
- DE-A1-102006 056 333
- FR-A1- 2 887 961

## Description

### FIELD OF INVENTION

Apparatuses consistent with the present invention relate to lamps, such as headlamps, which irradiate a forward region of a vehicle, as known from EP 1640 658.

### DESCRIPTION OF RELATED ART

Related art vehicle headlamps are configured such that light distribution patterns are selectively switchable between a high beam distribution pattern which is adapted to improve visibility of a forward region of the vehicle and a low beam distribution pattern which is adapted to prevent dazzling other vehicles, such as oncoming vehicles and preceding vehicles (i.e., vehicles traveling in front of the vehicle and in the same direction as the vehicle). However, since a manual operation by a driver has been required each time to switch the beams, the low beam is often maintained even under conditions in which the low beam is not necessarily required while sacrificing possible improvement in visibility of the forward region. Accordingly, there has been proposed a technique by which the high beam is basically selected and, when an in-vehicle camera detects any other vehicles that are present in front of the vehicle, the high beam is automatically switched to the low beam (see, e.g., JP 2007-112249 A)

Generally, the low beam distribution pattern is designed to irradiate only a strictly limited forward region so as not to dazzle oncoming vehicles and preceding vehicles. Thus, in a case in which, for example, only a preceding vehicle is present in front of the vehicle and the low beam is selected in response to a detection of the vehicle in front using the related art technique described above without distinguishing whether the vehicle in front is a preceding vehicle or an oncoming vehicle, the resulting low beam distribution pattern unnecessarily limits the irradiating region, i.e. unnecessarily prevents dazzling oncoming vehicles that are not actually present. This results in lowering of the driver's visibility, and thus, is not preferable in view of driving safety. Moreover, when a distance between the vehicle and other vehicles (i.e. the distance to the oncoming vehicle or the following distance behind the preceding vehicle) is relatively far but the low beam is selected regardless of the distance, there may be a time during which the low beam is unnecessarily selected, failing to irradiate a distant region of the gap between the own vehicle and the vehicle in front.

### SUMMARY OF INVENTION

It is an object of the present invention to provide a vehicle lamp which can improve visibility of a forward region of a vehicle without dazzling oncoming vehicles and preceding vehicles.

According to an illustrative aspect of the present invention, a vehicle lamp is provided. The vehicle lamp includes a light source, and a shade which is positioned to shield a part of light emitted from the light source. The shade is divided into a right shade section and a left shade section by a boundary, which is laterally shifted from an optical axis. The right shade section and the left shade section are configured such that a shielding range of the right shade section and a shielding range of the left shade are independently variable.

Other aspects and advantages of the invention will be apparent from the following description, the drawings and the claims.

### BRIEF DESCRIPTION OF THE DRAWINGS

Fig. 1 is a schematic view of an example of a vehicle on which vehicle headlamps according to an exemplary embodiment of the present invention are mounted;
Fig. 2 is a sectional view of a vehicle headlamp according to an exemplary embodiment of the present invention;
Fig. 3 is a perspective view of main shades of the respective vehicle headlamps;
Fig. 4A is a rear view of the main shades;
Fig. 4B is a partial top view of one of the main shades;
Fig. 4C is an explanatory view illustrating how the main shades shield light rays;
Figs. 5A and 5B are diagrams illustrating irradiating regions resulting from the respective main shades;
Fig. 6A is a diagram illustrating a high beam distribution pattern;
Fig. 6B is a diagram illustrating a low beam distribution pattern;
Figs. 7A and 7B are diagrams illustrating examples of a light distribution pattern to be created upon detection of an oncoming vehicle; and
Fig. 8A and 8B are diagrams illustrating examples of a light distribution pattern to be created upon detection of a preceding vehicle.

### DETAILED DESCRIPTION

Hereinafter, exemplary embodiments of the invention will be explained with reference to the drawings. The following exemplary embodiments do not limit the scope of the invention.

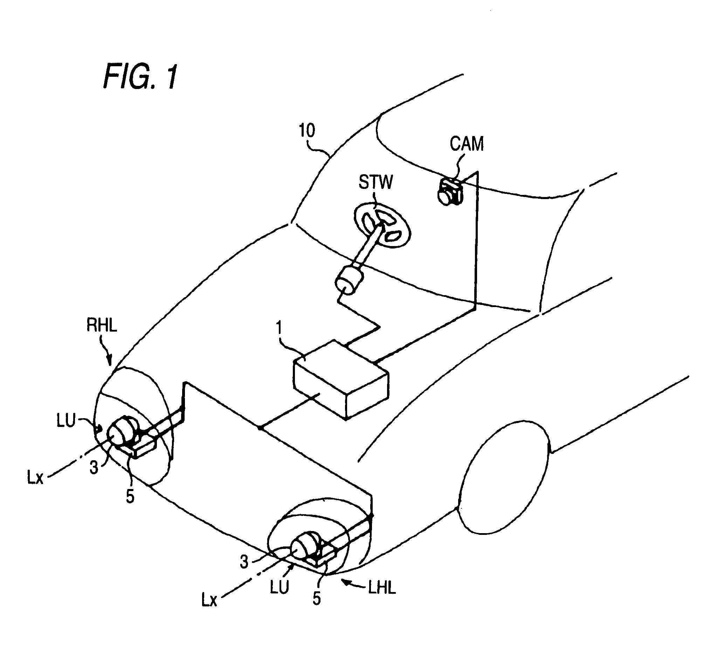

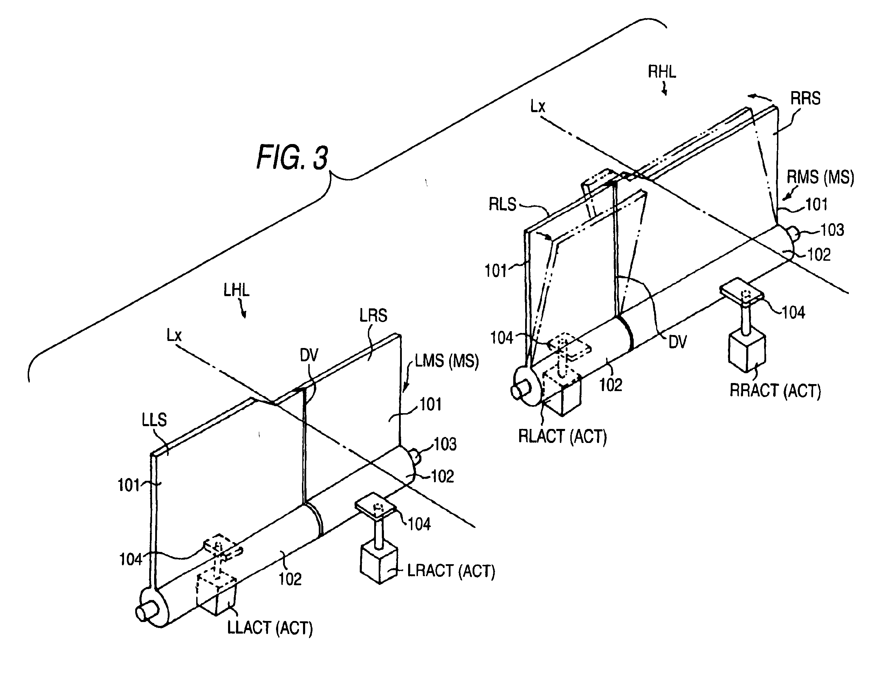

As shown in Fig. 1, right and left headlamps LHL, RHL according to an exemplary embodiment of the present invention are mounted on a vehicle 10, and are coupled to an electronic control unit (ECU) 1 which controls switching of light distribution patterns of the respective headlamps LHL, RHL. More specifically, a forward region monitoring camera CAM is provided on a front part of the vehicle 10, and is coupled to the ECU 1. Based on an image captured by the forward region monitoring camera CAM, the ECU 1 detects oncoming vehicles and preceding vehicles that are present in a forward region of the vehicle 10. When the ECU 1 detects an oncoming vehicle and/or a preceding vehicle, the ECU 1 drives and controls a main shade MS (i.e., a light shielding plate; see Fig. 3) of each of the right and left headlamps RHL, LHL to switch the respective light distribution patterns. In particular, the ECU 1 is configured to enable light irradiation with different light distribution patterns, depending on whether the detected vehicle is an oncoming vehicle or a preceding vehicle. Further, as will be described below, the ECU 1 is configured to control an optical axis Lx of each of the headlamps LHL, RHL to swivel in right and left directions based on detection of a steering angle of a steering wheel STW of the vehicle 10.

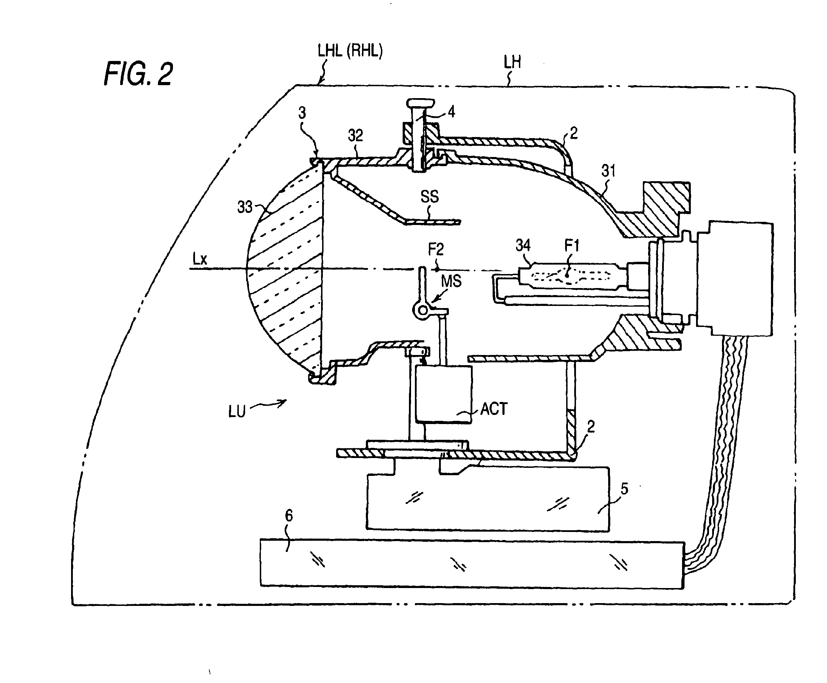

As shown in Fig. 2, each of the right and left headlamps RHL, LHL has a lamp housing LH and a lamp unit LU accommodated in the lamp housing LH. It should be noted that the lamp units LU of the right and left headlamps RHL, LHL are substantially the same except for the main shades MS which will be described later. As shown in Fig. 2 which is a sectional view taken along a plane including the optical axis Lx, each of the lamp units LU includes a bracket 2 having a C-shaped section, a projector-type lamp 3, a swivel shaft 4 through which the projector-type lamp 3 is supported on the bracket 2 so as to be swivelable in a horizontal direction within a given angular range, and a swivel mechanism 5 to which a lower end portion of the swivel shaft 4 is coupled. The swivel mechanism 5 is controlled by the ECU 1 such that the optical axis Lx of the projector-type lamp 3 is swiveled in right and left directions so as to follow the steering angle of the steering wheel STW, thereby improving visibility in a direction of steering operation. The lamp unit LU further includes a lighting circuit unit 6 which is arranged below the swivel mechanism 5 to function as a power supply for turning the projector-type lamp 3 on.

The projector-type lamp 3 includes a semi-spheroidal reflector 31, a cylindrical retainer 32 coupled to a front end portion of the reflector 31, a collective lens 33 supported by a front end portion of the retainer 32, a discharge bulb 34 having a light source point disposed on or near a first focal point F1 of the reflector 31 to emit light due to a discharge energized by electric power supplied from the lighting circuit unit 6. The main shade MS is disposed near a second focal point F2 of the reflector 31 to shield a part of the light emitted from the discharge bulb 34 so that a desired light distribution pattern can be set. An actuator ACT is provided to drive the main shade MS in order to change the light distribution patterns. Further, a sub-shade SS is provided on an inner side of the retainer 32 to shield stray light reflected by the reflector 31.

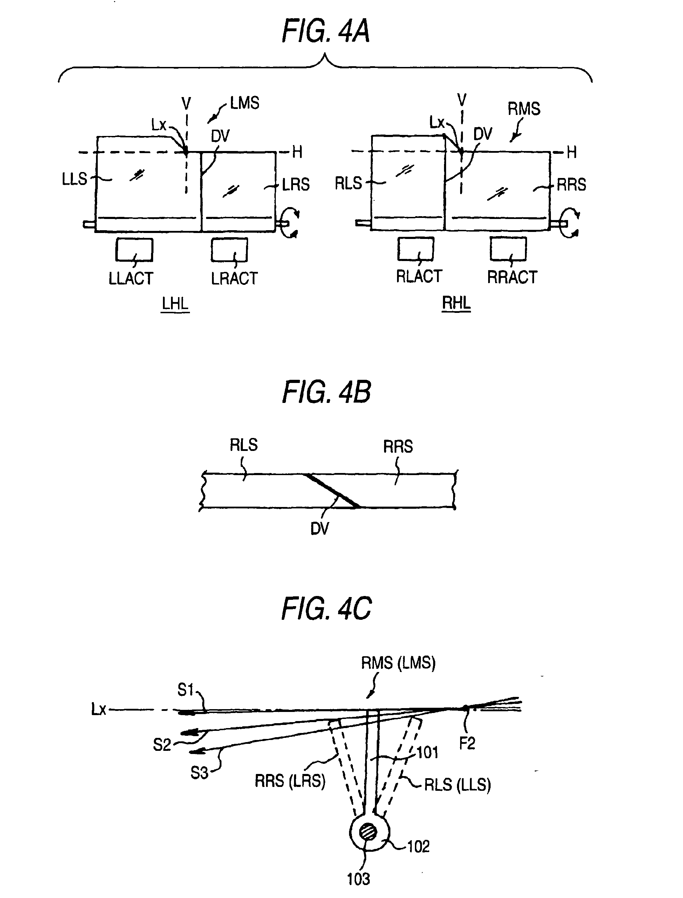

Fig. 3 is a perspective view, seen from a rear side (i.e. a light source side), of the main shades MS (RMS, LMS) of the respective projector-type lamps 3 of the right and left headlamps RHL, LHL, and Fig. 4A is a rear view of the respective main shades MS (RMS, LMS). The main shade MS of the right headlamp RHL (hereinafter, the right main shade RMS) is a plate-like member having a laterally long rectangular shape and is arranged substantially along a vertical plane perpendicular to the optical axis Lx. An upper edge of the main shade RMS is configured to form a horizontal cutoff line and an oblique cutoff line of a low beam distribution pattern which will be described later. The right main shade RMS is divided into right and left shade sections RRS, RLS along a dividing boundary DV which vertically extends on the left of the optical axis Lx (hereinafter, right and left with respect to the detailed configuration of the main shades MS will imply right and left when viewed from the rear side of the main shades MS, i.e., from the light source side).

Fig. 4B is an enlarged top view of the dividing boundary DV of the right main shade RMS. As shown in Fig. 4B, when seen from the top, the dividing boundary DV is inclined with respect to a plate thickness direction of the right main shade RMS. That is, inclined faces of the respective shade sections RRS, RLS at the dividing boundary DV overlap with each other in the direction of the optical axis Lx such that, when the inclined faces are brought into contact with each other, the light reflected from the reflector 31 does not leak out toward the front side of the main shade RMS through the dividing boundary DV between the right and left shade sections RRS, RLS.

Each of the right and left shade sections RRS, RLS includes a shielding plate 101 and a cylindrical part 102 provided on a lower edge of the shielding plate along the horizontal direction. A shade tilting shaft 103 is inserted through the cylindrical parts 102 of the respective shade sections RRS, RLS. The right shade section RRS is forwardly tiltable about the shade tilting shaft 103, and the left shade section RLS is rearwardly tiltable about the shade tilting shaft 103. The right shade section RRS is coupled to an actuator RRACT and the left shade section RLS is coupled another actuator RLACT, so that the right and left shade sections RRS, RLS are independently tiltable by the respective actuators RRACT, RLACT. Each of the actuators RRACT, RLACT may have a solenoid mechanism. For example, each of the actuators RRACT, RLACT may have a plunger that projects when energized through the control of the ECU 1. In this case, each of the plungers of the actuators RRACT, RLACT may be coupled to a respective protruded piece 104 extending from the cylindrical part 102 of each of the shade sections RRS, RLS. The respective actuators RRACT, RLACT and the protruded pieces 104 are arranged such that the right shade section RRS is forwardly tilted from a vertical state when pushed by the plunger and such that the left shade section RLS is rearwardly tilted from a vertical state when pushed by the plunger.

The overall geometry of the left main shade LMS of the left headlamp LHL is the same as that of the right main shade RMS, except that the dividing boundary DV which divides the left main shade LMS into right and left shade sections LRS, LLS is located to the right of the optical axis Lx. Other configurations such as the inclination of the dividing boundary DV with respect to the plate thickness direction and the independent forward/rearward tilting of the right and left shade sections LRS, LLS using actuators LRACT, LLACT are equivalent to those of the right main shade RMS. Other components of the left main shade LMS that are equivalent to those of the right main shade RMS will be denoted with the same reference numerals, and detailed descriptions thereof will be omitted.

In each of the right and left headlamps RHL, LHL having the configuration described above, when the discharge bulb 34 is turned on, a part of the light emitted from the discharge bulb 34 is reflected by the reflector 31 and is partially collected at the second focal point F2 of the reflector 31. A part of the light that does not contribute to the light irradiation is shielded by the sub-shade SS. Another part of the light that can contribute to the light irradiation is forwardly irradiated from the second focal point F2. However, downwardly directed light below the optical axis Lx may be shielded by the right or left main shade RMS, LMS, depending on the shielding control of the right and left main shades RMS, LMS. More specifically, as shown in Fig. 4C, when the right and left shade sections RRS, RLS (LRS, LLS) are both oriented in the vertical direction as indicated by a solid line, the lowest unshielded light ray S 1 extends substantially along the optical axis Lx However, the lowest unshielded light ray S2 when the right shade section RRS (LRS) is forwardly tilted as indicated by a broken line and the lowest unshielded light ray S3 when the left shade section RLS (LLS) is rearwadly tilted as indicated by a broken line extend below the optical axis Lx. Accordingly, when refracted through the collective lens 33 and irradiated toward the forward region of the vehicle 10, the lowest unshielded light rays S2, S3 are directed upward toward the region above the optical axis Lx more than the lowest unshielded light ray S1.

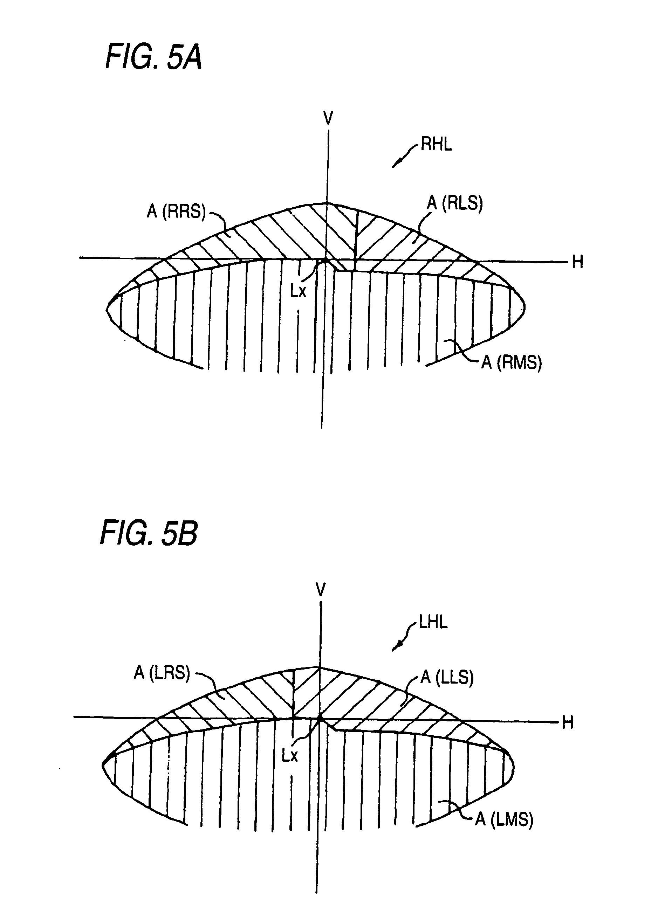

Fig. 5A illustrates light distribution patterns achieved by the right main shade RMS of the right headlamp RHL. In this drawing, the optical axis Lx is coincident with a horizontal straight-ahead direction of the vehicle 10, and is an intersecting point of the horizontal line H and the vertical line V. An irradiating region A(RMS) is a region to be irradiated when the right and left shade sections RRS, RLS of the right main shade RMS are both oriented in the vertical direction. This irradiating region A(RMS) is below the horizontal line H, and has a horizontal cutoff line and an oblique cutoff line corresponding to the shapes of the upper edges of the right and left shade sections RRS, RLS, respectively. When the right shade section RRS is forwardly tilted, another irradiating region A(RRS) is irradiated in addition to the irradiating region A(RMS). This irradiating region A(RRS) is primarily located above the horizontal line H and on the left of the vertical line V, but also includes a region slightly on the right of the vertical line V. When the left shade section RLS is rearwardly tilted, an irradiating region A(RLS) is irradiated in addition to the irradiating region A(RMS). This irradiating region A (RLS) is on the right of the vertical line V and the irradiating region A(RRS), and is primarily located above the horizontal line H. Light distribution patterns achieved by the left main shade LMS of the left headlamp LHL are illustrated in Fig. 5B. As described above, the position of the dividing boundary DV between the right and left shade sections LRS, LCS of the left main shade LMS is different from that of the right main shade RMS. Therefore, while an irradiating region A(LMS), which is similar to the irradiating region A(RMS), is irradiated when the right and left shade sections LRS, LLS are both oriented in the vertical direction, an irradiating region A(LRS) which is to be additionally irradiated when the right shade section LRS is tilted and an irradiating region A(LLS) which is to be additionally irradiated when the left shade section LLS is tilted are different from the irradiating regions A(RRS), A(RLS). The simultaneous lighting of the right and left headlamps RHL, LHL creates superimposed light distribution patterns of those illustrated in Figs. 5A and 5B.

According to the vehicle 10 of the exemplary embodiment, when the right and left headlamps RHL, LHL are turned on, light distribution control operations can be carried out in a manual mode or in an automatic mode. In the manual mode, the light distribution pattern is selectively switchable between the high beam distribution pattern and the low beam distribution pattern through a manual switching operation of the driver. In the automatic mode, images of a forward region of the vehicle 10 are captured by the forward region monitoring camera CAM. When the ECU 1 detects an oncoming vehicle and/or a preceding vehicle based on the captured images, the ECU 1 drives and controls the respective right and left main shades RMS, LMS to change the light distribution patterns of the right and left headlamps RHL, LHL so as to improve a driver's visibility by maximizing the irradiating region without dazzling the oncoming vehicles and/or the preceding vehicles. Detailed variations of the light distribution controls will be described below.

MANUAL MODE

High Beam

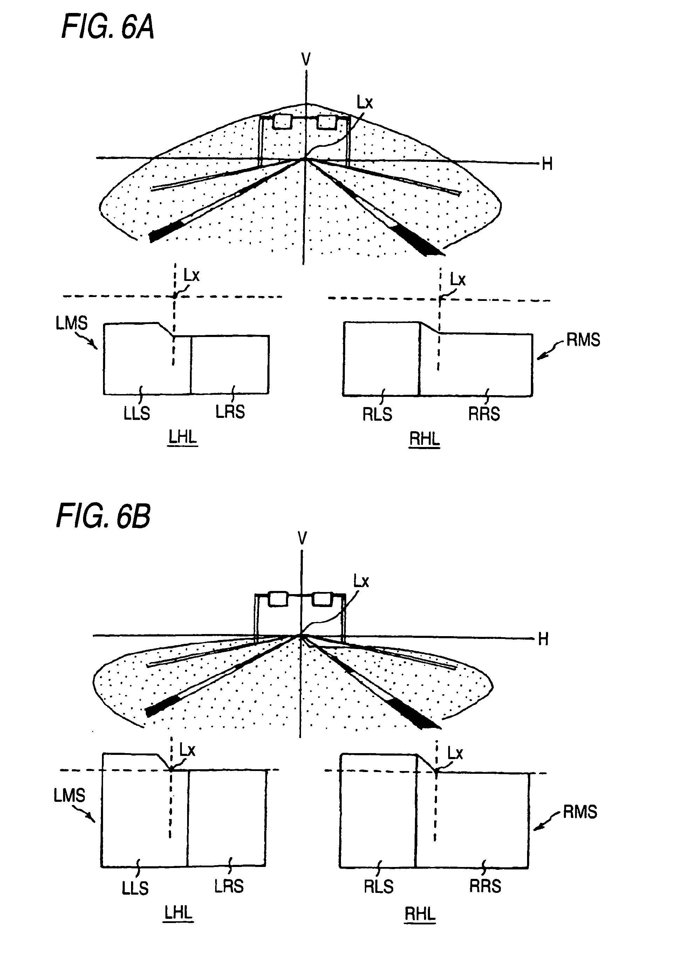

Fig. 6A illustrates the high beam distribution pattern together with orientations of the right and left main shades RMS, LMS of the right and left headlamps RHL, LHL during the high beam. When the driver selects the high beam in the manual mode, the right shade sections RRS, LRS are forwardly tilted and the left shade sections RLS, LLS are rearwardly tilted so as to allow the light rays S2, S3 shown in Fig. 4C to be irradiated in the forward region. Accordingly, a part of the light reflected by the reflector 31 is upwardly irradiated above the optical axis Lx to create the light distribution pattern having the maximum irradiating region including the region above the optical axis Lx, whereby the visibility of the forward region of the vehicle 10 is enhanced.

Low Beam

Fig. 6B illustrates the low beam distribution pattern together with the orientations of the right and left main shades RMS, LMS of the right and left headlamps RHL, LHL during the low beam. When the driver selects the low beam mode in the manual mode, the right and left shade sections RRS, RLS, LRS, LLS of the right and left main shades RMS, LMS are all oriented in the vertical direction so as to shield the light rays S2, S3 shown in Fig. 4C, whereby the light reflected by the reflector 31 is shielded in a maximum degree. Accordingly, the region below the horizontal line H is irradiated with the light distribution pattern having the cutoff lines corresponding to the shapes of the upper edges of the respective main shades RMS, LMS. This low beam distribution pattern prevents dazzling the oncoming vehicles and the preceding vehicles.

AUTOMATIC MODE

No Oncoming/Preceding Vehicles in Forward Region

When the ECU 1 determines that there are no oncoming vehicles or preceding vehicles in the forward region of the vehicle 10 based on an image acquired by the forward region monitoring camera CAM, the ECU I controls the right and left main shades RMS, LMS of the right and left headlamps RHL, LHL to be set in the same condition as in the case in which the high beam is selected in the manual mode. That is, the right shade sections RRS, LRS are forwardly tilted, and the left shade sections RLS, LLS are rearwardly tilted, whereby the high beam distribution pattern illustrated in Fig. 6A is created.

Oncoming Vehicle in Distant Forward Region

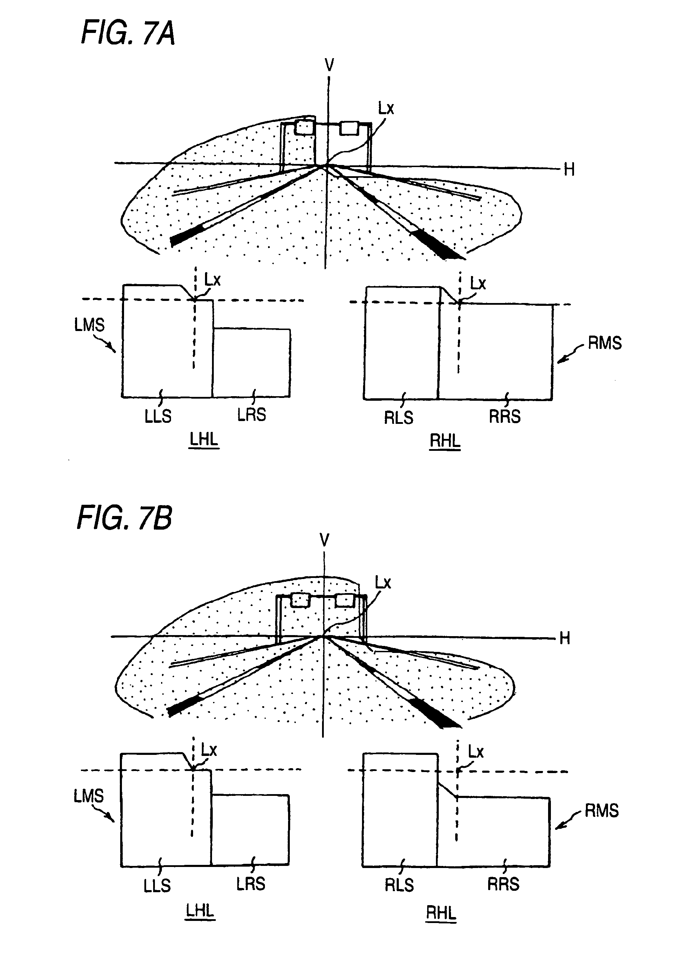

When the ECU 1 detects an oncoming vehicle in a distant forward region (i.e. a region near the optical axis Lx) of the vehicle 10 based on an image acquired by the forward region monitoring camera CAM, the ECU 1 controls the right and left main shades RMS, LMS of the right and left headlamps RHL, LHL to create the light distribution pattern illustrated in Fig. 7A. That is, the ECU I forwardly tilts the right shade section LRS of the left main shade LMS while maintaining the right and left shade sections RRS, RLS of the right main shade RMS and the left shade section LLS of the left main shade LMS in the vertical condition. Accordingly, the right headlamp RHL irradiates light with its low beam distribution pattern and the left headlamp LHL irradiates light with the irradiating region A(LRS) added to its low beam distribution pattern. As a result of the combination of the right and left headlamps RHL, LHL, in comparison with the high beam distribution pattern, light irradiation toward the region rear the optical axis Lx and the region above the horizontal line H and on the right of the vertical line V is shielded. Consequently, while preventing dazzling the oncoming vehicle, the upper left region where no vehicles are present is irradiated to improve the visibility of the distant forward region of the vehicle 10.

Oncoming Vehicle in Near Forward Region

When the ECU I detects an oncoming vehicle in a near forward region (i.e. a region on the right to the optical axis Lx) of the own vehicle 10 based on an image acquired by the forward region monitoring camera CAM, the ECU 1 controls the right and left main shades RMS, LMS of the right and left headlamps RHL, LHL to create the light distribution pattern illustrated in Fig. 7B. That is, the ECU 1 forwardly tilts the right shade sections RRS, LRS of the right and left main shades RMS, LMS. Accordingly, the right headlamp RHL irradiates light with the irradiating region A(RRS) added to its low beam distribution pattern and the left headlamp LHL irradiates light with the irradiating region A(LRS) added to its low beam distribution pattern. As a result of the combination of the right and left headlamps RHL, LHL, in comparison with the high beam distribution pattern, light irradiation toward the region above the horizontal line H and on the right of the region near the optical axis Lx is shielded. Consequently, while preventing dazzling the oncoming vehicle in the near forward region of the vehicle 10, the region rear the optical axis Lx and the upper left region where no vehicles are present are irradiated to improve the visibility of the distant forward region of the vehicle 10.

Preceding Vehicle in Distant/Near Forward Region

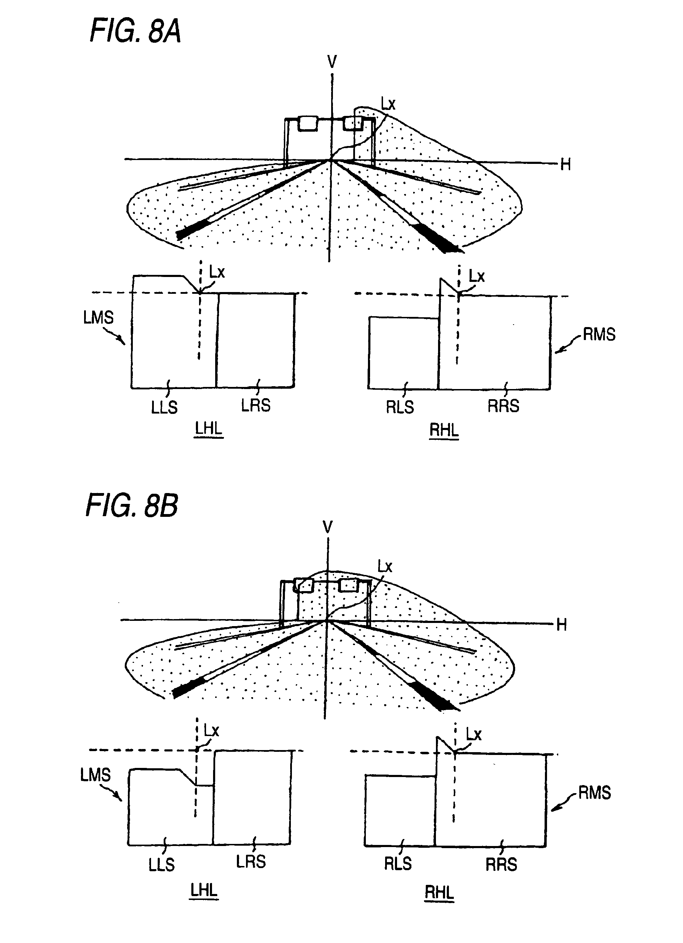

When the ECU 1 detects a preceding vehicle in a distant forward region of the vehicle 10 based on an image acquired by the forward region monitoring camera CAM, the ECU 1 controls the right and left main shades RMS, LMS of the right and left headlamps RHL, LHL to create the light distribution pattern illustrated in Fig. 8A. That is, the ECU 1 rearwardly tilts the left shade section RLM of the right main shade RMS while maintaining the right shade section RRS of the right main shade RMS and the right and left shade sections LRS, LLS of the left main shade LMS in the vertical condition. Accordingly, the right headlamp RHL irradiates light with the irradiating region A(RLS) added to its low beam distribution pattern and the left headlamp LHL irradiates light with its low beam distribution pattern. As a result of the combination of the right and left headlamps RHL, LHL, light is irradiated with the light distribution pattern in which light irradiation toward the region rear the optical axis Lx and the region above the horizontal line H and on the left of the vertical line V is shielded. Consequently, while preventing dazzling the preceding vehicle in the distant forward region, the upper right region where no vehicles are present is irradiated to improve the visibility of the distant forward region of the vehicle 10.

Preceding Vehicle in Left Forward Region

When the ECU 1 detects a preceding vehicle in a left forward region of the vehicle 10 based on an image acquired by the forward region monitoring camera CAM, the ECU 1 controls the right and left main shades RMS, LMS of the right and left headlamps RHL, LHL to create the light distribution pattern illustrated in Fig. 8B. That is, the ECU 1 rearwardly tilts the left shade sections RLS, LLS of the right and left main shades RMS, LMS. Accordingly, the right headlamp RHL irradiates light with the irradiating region A(RLS) added to its low beam distribution pattern and the left headlamp LHL irradiates light with the irradiating region A(LLS) added to its low beam distribution pattern. As a result of the combination of the right and left headlamps RHL, LHL, light is irradiated with the light distribution pattern in which light irradiation toward the region above the horizontal line H and on the left of the region near the optical axis Lx is shielded. Consequently, while preventing dazzling the preceding vehicle in the left forward region of the vehicle 10, the region rear the optical axis Lx and the upper right region where no vehicles are present are irradiated to improve the visibility of the distant forward region of the vehicle 10.

In combination with the light distribution controls described above using the right and left main shades RMS, LMS, the optical axis Lx may additionally be swiveled in the right and left directions using the swivel mechanism 5 illustrated in Fig. 5. In such a case, the light distribution patterns illustrated in Fig. 6A to Fig. 8B can be made to deflect in the right and left directions so as to prevent dazzling the oncoming vehicles and/or the preceding vehicles more reliably.

### Additional Exemplary Embodiments and Modifications

While the dividing boundary DV between the right and left shade sections of each of the right and left main shades RMS, LMS extends in the vertical direction in the exemplary embodiment described above, according to another exemplary embodiment of the present invention, the dividing boundary DV may be designed to incline with respect to the vertical direction. Further, while the right and left shade sections are forwardly or rearwardly tilted to change the shielding ranges thereof in the exemplary embodiment described above, according to another exemplary embodiment of the present invention, the respective shade sections may be configured to slide up and down or may be configured to be movable in any other way that can change the shielding ranges. Furthermore, the actuators are not limited to have the solenoid mechanism as in the exemplary embodiment described above, and may have any configurations in so far they can control the shielding ranges of the respective shade sections.

According to the exemplary embodiments described above, the right shade section and the left shade section have asymmetrical configurations with respect to the optical axis Lx, and the shielding ranges thereof are independently variable so that the right forward region and the left forward region are asymmetrically irradiated. Furthermore, a position at which the main shade RMS, LMS is divided in to the right and left shade sections is different in the right and left headlamps RHL, LHL, and the shielding ranges of the respective shade sections RRS, RLS, LRS, LLS are selectively changeable. Therefore, a suitable light distribution can be created depending on a detection of an oncoming vehicle and/or a preceding vehicle so as to improve visibility of the forward region of the own vehicle in a wide range as possible without dazzling the oncoming vehicle and/or the preceding vehicle.

While the present invention has been shown and described with reference to certain exemplary embodiments thereof, it will be understood by those skilled in the art that various changes in form and details may be made therein without departing from the spirit and scope of the invention as defined by the appended claims.

## Claims

1. A vehicle lamp comprising:
a light source (34); and
a shade (MS) which is positioned to shield a part of light emitted from the light source (34),
**characterized in that** the shade (MS) is divided into a right shade section and a left shade section by a boundary (DV), which is laterally shifted from an optical axis (Lx), and
the right shade section and the left shade section are configured such that a shielding range of the right shade section and a shielding range of the left shade are independently variable.

2. The vehicle lamp according to claim 1, further comprising a swivel mechanism (5) which swivels the light source (34) and the shade (MS) in order to laterally vary the optical axis (Lx).

3. A combination of a right headlamp (RHL) and a left headlamp (LHL), **characterized in that** each of the right and left headlamps (RHL, LHL) comprises the vehicle lamp according to claim 1 or 2.

4. The combination according to claim 3, wherein a relative location of the boundary (DV) in the right headlamp (RHL) with respect to the optical axis (Lx) of the right headlamp (RHL) is different from a relative location of the boundary (DV) of the left headlamp (LHL) with respect to the optical axis (Lx) of the left headlamp (LHL).

5. The combination according to claim 3 or 4, wherein the boundary (DV) is located on the right of the optical axis (Lx) in one of the right and left headlamps(RHL, LHL), and the boundary (DV) is located on the left of the optical axis (Lx) in the other of the right and left headlamps (RHL, LHL).

## Patentansprüche

1. Fahrzeugscheinwerfer, umfassend:
eine Lichtquelle (34) und
eine Blende (MS), welche angeordnet ist, um einen Teil des von der Lichtquelle (34) emittierten Lichts abzuschirmen,
**dadurch gekennzeichnet, daß** die Blende (MS) in einen rechten Blendenabschnitt und einen linken Blendenabschnitt durch eine Begrenzung (DV) geteilt ist, welche von einer optischen Achse (Lx) seitlich versetzt ist, und
der rechte Blendenabschnitt und der linke Blendenabschnitt so gestaltet sind, daß ein Abschirmbereich des rechten Blendenabschnitts und ein Abschirmbereich des linken Blendenabschnitts unabhängig voneinander veränderbar sind.

2. Fahrzeugscheinwerfer nach Anspruch 1, ferner umfassend einen Schwenkmechanismus (5), welcher die Lichtquelle (34) und die Blende (MS) verschwenkt, um die optische Achse (Lx) seitlich zu verlagern.

3. Kombination aus rechtem Scheinwerfer (RHL) und linkem Scheinwerfer (LHL), **dadurch gekennzeichnet, daß** jeder der rechten und linken Scheinwerfer (RHL, LHL) den Fahrzeugscheinwerfer nach Anspruch 1 oder 2 umfaßt.

4. Kombination nach Anspruch 3, wobei eine relative Position der Begrenzung (DV) in dem rechten Scheinwerfer (RHL) bezüglich der optischen Achse (Lx) des rechten Scheinwerfers (RHL) sich von einer relativen Position der Begrenzung (DV) des linken Scheinwerfers (RHL) bezüglich der optischen Achse (Lx) des linken Scheinwerfers (LHL) unterscheidet.

5. Kombination nach Anspruch 3 oder 4, wobei die Begrenzung (DV) rechts der optischen Achse (Lx) in einem von dem rechten und dem linken Scheinwerfer (RHL, LHL) angeordnet ist und die Begrenzung (DV) links der optischen Achse (Lx) in dem anderen von dem rechten und dem linken Scheinwerfer (RHL, LHL) angeordnet ist.

## Revendications

1. Lampe pour véhicule comprenant :
une source de lumière (34) ; et
un écran (MS) positionné de manière à masquer une partie de la lumière émise par la source de lumière (34),
**caractérisée en ce que** l'écran (MS) est divisé en une section d'écran droite et une section d'écran gauche par une limite (DV), qui est décalée latéralement par rapport à un axe optique (Lx), et
la section d'écran droite et la section d'écran gauche sont configurées de telle sorte qu'une plage de masquage de la section d'écran droite et une plage de masquage de la section d'écran gauche sont variables d'une manière indépendante.

2. Lampe pour véhicule selon la revendication 1, comprenant en outre un mécanisme de pivot (5) qui fait pivoter la source de lumière (34) et l'écran (MS) de manière à faire varier latéralement l'axe optique (Lx).

3. Combinaison d'un phare droit (RHL) et d'un phare gauche (LHL) **caractérisée en ce que** chacun des phares droit et gauche (RHL, LHL) comprend la lampe pour véhicule selon la revendication 1 ou 2.

4. Combinaison selon la revendication 3, dans laquelle l'emplacement relatif de la limite (DV) dans le phare droit (RHL) par rapport à l'axe optique (Lx) du phare droit (RHL) est différent de l'emplacement relatif de la limite (DV) du phare gauche (LHL) par rapport à l'axe optique (Lx) du phare gauche (LHL).

5. Combinaison selon la revendication 3 ou 4, dans laquelle la limite (DV) est située à droite de l'axe optique (Lx) de l'un des phares droit et gauche (RHL, LHL) et la limite (DV) est située à gauche de l'axe optique (Lx) de l'autre des phares droit et gauche (RHL, LHL).
